# EUROPÄISCHE PATENTANMELDUNG

(11) **EP 3 960 602 A1**
(43) Veröffentlichungstag der Anmeldung: **02.03.2022**
(21) Anmeldenummer: 21191342.1
(22) Anmeldetag: 13.08.2021
(51) Int. Cl.: B62J 43/28, B62J 43/13, B62K 19/40, H01M 10/42, H02J 7/00

(54) **BATTERIEEINHEIT UND FAHRRADRAHMEN**

(30) Priorität: 27.08.2020 DE 202020104966 U
(71) Anmelder: Canyon Bicycles GmbH, 56073 Koblenz (DE)
(72) Erfinder: Klein, Philipp, 56073 Koblenz (DE); Parameter, Christian, 56068 Koblenz (DE); Thoma, Vincenz, 87538 Obermaiselstein (DE); Schmidt, Patrick, 56068 Koblenz (DE)
(74) Vertreter: dompatent von Kreisler Selting Werner - Partnerschaft von Patent- und Rechtsanwälten mbB

(57) **Zusammenfassung**

Die Erfindung betrifft eine Batterieeinheit für ein einen Elektromotor aufweisendes Fahrrad. Die Batterieeinheit weist ein Batteriegehäuse (10) auf. Eine in Fahrtrichtung (12) linke Seite (14) des Batteriegehäuses (10) ist gestuft ausgebildet. Hierdurch ist ein Ansatz (28) ausgebildet, in dem ein Batteriemanagementsystem (30) seitlich neben Energiezellen (40) angeordnet ist. Ferner betrifft die Erfindung einen Fahrradrahmen mit einem asymmetrisch ausgebildeten Unterrohr (42), das insbesondere zur Aufnahme der Batterieeinrichtung ausgebildet ist.

## Beschreibung

Die Erfindung betrifft eine Batterieeinheit für ein einen Elektromotor aufweisendes Fahrrad, d.h. ein E-Bike. Ferner betrifft die Erfindung einen Fahrradrahmen, insbesondere einen Mountainbike- oder Trekkingbike-Fahrradrahmen. Insbesondere betrifft die Erfindung einen Fahrradrahmen mit einer Batterieeinheit.

Fahrradrahmen weisen üblicherweise ein Unterrohr, ein Steuerrohr und ein Sattelrohr auf. Das Unterrohr ist mit dem Steuerrohr verbunden, das die Vorderradgabel aufnimmt. Das Steuerrohr kann mit dem Unterrohr verbunden sein. Üblicherweise ist das Sattelrohr und das Unterrohr mit einem Motorgehäuse verbunden. Bei Fahrrädern, die einen Elektromotor aufweisen, ist anstelle des Tretkurbelgehäuses ein Motorgehäuse vorgesehen. Ferner sind E-Bikes bekannt, bei denen der Elektromotor in der Hinterradnabe angeordnet ist. Bei Fahrradrahmen mit einem Motorgehäuse, ist der Elektromotor und somit auch das Motorgehäuse asymmetrisch ausgebildet. Dies liegt daran, dass kettenblattseitig ausreichend Bauraum für das Kettenblatt und die Anordnung der Kette vorgegeben sein muss. Der Elektromotor ragt daher bezogen auf eine Rahmenmittelebene auf der kettenblattabgewandten Seite vor. Die Rahmenmittelebene ist insbesondere die durch das Sattelrohr und das Steuerrohr ausgebildete Symmetrieebene des Rahmens. Bei einem montierten Fahrrad ist in derselben Ebene das Hinterrad und bei Geradeausfahrt das Vorderrad angeordnet. Zu der Rahmenmittelebene ist das Motorgehäuse asymmetrisch ausgebildet.

E-Bikes weisen jeweils Batterieeinheiten auf, die an unterschiedlichen Stellen des Rahmens angeordnet sein können. Bei modernen E-Bikes ist die Batterieeinheit im Unterrohr angeordnet. Aus EP 3 590 814 ist es bekannt, das Unterrohr derart mit dem Motorgehäuse zu verbinden, dass das Unterrohr eine im Wesentlichen unterhalb des Motorgehäuses angeordnete Einschuböffnung aufweist, um die Batterie in das Unterrohr einzuschieben.

Bekannte Batterieeinheiten weisen ein Batteriegehäuse auf, in dem Energiezellen angeordnet sind. Die einzelnen Zellen sind hierbei üblicherweise in Längsrichtung des Batteriegehäuses angeordnet. Die Gehäuse weisen einen über die gesamte Länge konstanten symmetrischen Querschnitt auf.

Aufgabe der Erfindung ist es, die Gestaltung einer Batterieeinheit sowie des Fahrradrahmens zu verbessern. Vorzugsweise soll hierdurch eine Batterie mit möglichst großer Kapazität bei vorteilhafter Ausgestaltung der Rahmengeometrie erzielt werden.

Die Lösung der Aufgabe erfolgt erfindungsgemäß durch eine Batterieeinheit gemäß Anspruch 1 sowie einen Fahrradrahmen gemäß Anspruch 8.

Die erfindungsgemäße Batterieeinheit für einen einen Elektromotor aufweisenden Fahrradrahmen weist ein Batteriegehäuse auf. Das Batteriegehäuse weist zumindest eine Oberseite, eine Unterseite und zwei Seitenwände auf. Das Batteriegehäuse kann einen im Wesentlichen rechteckigen Querschnitt aufweisen, wobei die Enden abgeflacht oder abgerundet sein können. In dem Batteriegehäuse sind mehrere Energiezellen zur Energiespeicherung angeordnet. Des Weiteren ist ein mit den Energiezellen verbundenes Batteriemanagementsystem (BMS) vorgesehene. Erfindungsgemäß ist das Batteriemanagementsystem an einer der beiden Seitenwände angeordnet. Insbesondere ist das Batteriemanagementsystem derart angeordnet bzw. ausgebildet, dass es teilweise neben den Energiezellen angeordnet ist. In Bezug auf das Batteriegehäuse ist das Batteriemanagementsystem somit nicht im Bereich einer Vorderseite oder Rückseite des Gehäuses angeordnet. Die Vorderseite und die Rückseite sind die das Batteriegehäuse in Längsrichtung abzuschließenden Seiten.

Durch die seitliche Anordnung des Batteriemanagementsystems können auf die Länge des Batteriegehäuses eine größere Anzahl an Energiezellen angeordnet werden. Insofern kann die Gesamtkapazität erhöht werden. Auch ist es durch das seitliche Anordnen des Batteriemanagementsystems möglich, das Unterrohr des Fahrradrahmens derart zu gestalten, dass das seitlich und somit asymmetrisch angeordnete Batteriemanagementsystem an der dem Kettenblatt abgewandten Seite angeordnet werden kann. In diesem Bereich ragt auch das asymmetrische Motorgehäuse vor. Insofern kann eine optisch schlankere Gestaltung des Fahrradrahmens insbesondere im Bereich des Unterrohrs erzielt werden. In Einschubrichtung der Batterieeinheit in das Unterrohr des Fahrradrahmens ist es somit vorteilhaft, dass das Batteriemanagementsystem auf der linken Seite angeordnet ist.

Vorzugsweise ist das Batteriemanagementsystem teilweise oder vollständig innerhalb des Batteriegehäuses angeordnet, so dass das Batteriemanagementsystem geschützt ist. Ein Steckkontakt des Batteriemanagementsystems ist in bevorzugter Ausführungsform derart angeordnet, dass dieser ebenfalls seitlich angeordnet ist. Ein in den Steckkontakt einzusteckender Stecker zur elektrischen Verbindung mit dem Elektromotor muss somit seitlich bezogen auf die Längsrichtung des Batteriegehäuses eingesteckt werden. Je nach Ausgestaltung des Steckers ist die Einsteckrichtung des Steckers somit senkrecht oder parallel zur Längsachse des Batteriegehäuses.

In besonders bevorzugter Ausführungsform verjüngt sich das Batteriegehäuse in Längsrichtung bzw. in Einschubrichtung. Insbesondere kann eine stufenförmige Verjüngung vorgesehen sein. Bei einer bevorzugten Ausführungsform ist das Batteriegehäuse in dem Bereich, in dem das Batteriemanagementsystem angeordnet ist, breiter und weist eine Ausbuchtung auf. In Längsrichtung weist das Batteriegehäuse vorzugsweise eine nach innen führende Stufe auf, an der das Batteriemanagementsystem in Längsrichtung endet.

Zur Anordnung des Batteriemanagementsystems im Batteriegehäuse ist es bevorzugt, dass das Gehäuse bezogen auf den Bereich, in dem kein Batteriemanagementsystem angeordnet ist, einen vorzugsweise quaderförmigen Ansatz aufweist.

Bevorzugt ist es ferner, dass das Batteriegehäuse an einer Vorderseite eine geringere Breite als an einer Rückseite aufweist. Die Vorderseite und Rückseite sind die in Längsrichtung des Batteriegehäuses die das Gehäuse abschließenden Seiten. Die Vorderseite ist bei eingebauter Batterieeinheit die obere Seite.

Bei einer besonders bevorzugten Ausführungsform sind die einzelnen Energiezellen quer zur Längsrichtung des Gehäuses in diesem angeordnet. Die einzelnen Energiezellen sind somit in Längsrichtung hintereinander angeordnet.

Auch ist es möglich, eine größere Anzahl an Energiezellen in dem Batteriegehäuse anzuordnen, so dass bei gleichen Abmessungen des Batteriegehäuses eine Batterieeinheit mit einer größeren Anzahl an Energiezellen und größeren Leistung ausgebildet werden kann.

Der erfindungsgemäße Fahrradrahmen, bei dem es sich insbesondere um einen Mountainbike-Rahmen oder einen Trekkingfahrrad-Rahmen handelt, weist ein Motorgehäuse zur Aufnahme eines Elektromotors auf. Mit dem Motorgehäuse ist ein Unterrohr verbunden. In bevorzugter Ausführungsform weist der Fahrradrahmen ein mit dem Unterrohr verbundenes Sattelrohr auf. Ferner kann ein Oberrohr vorgesehen sein, das mit dem Sattelrohr verbunden ist. Bei einer erfindungsgemäßen Ausführungsform ist es bevorzugt, dass das Unter- und das Oberrohr mit einem eine Vorderradgabel aufnehmenden Steuerrohr gebunden ist.

Das Unterrohr ist derart mit dem Motorgehäuse verbunden, dass im Bereich des Motorgehäuses im Unterrohr eine Einschuböffnung vorgesehen ist. Die Einschuböffnung, die vorzugsweise mit einem Deckel verschließbar ist, dient zum Einschieben einer Batterieeinheit in das Unterrohr. Dabei ist das Unterrohr bezogen auf eine Rahmenmittelebene asymmetrisch. Vorzugsweise ist die Asymmetrie derart ausgestaltet, dass das Unterrohr insbesondere an dem in Richtung des Motorgehäuses weisenden bzw. mit dem Motorgehäuse verbundenen Bereich asymmetrisch ausgebildet ist. Bevorzugt ist es, dass das Unterrohr in diesem Bereich auf der dem Kettenblatt abgewandten Seite eine größere Ausdehnung bezogen auf die Rahmenmittellinie aufweist als auf der Kettenblattseite.

Vorzugsweise ist das Unterrohr derart ausgestaltet, dass es sich ausgehend von dem Motorgehäuse verjüngt. Das Unterrohr verjüngt sich somit insbesondere in Richtung des Steuerrohrs bzw. in Fahrtrichtung.

In besonders bevorzugter Ausführungsform erfolgt die Querschnittsänderung bzw. Verjüngung des Unterrohrs derart, dass sich das Unterrohr kettenblattseitig bezogen auf die Rahmenmittelebene weniger verjüngt als auf der kettenblattabgewandten Seite. Insbesondere verläuft die kettenblattseitige Seite des Unterrohrs parallel zur Rahmenmittelebene. Die Asymmetrie des Unterrohrs ist somit auf der kettenblattabgewandten Seite ausgebildet. Besonders bevorzugt ist es, dass sich der Abstand zwischen der Außenseite des Unterrohrs und der Rahmenmittelebene auf der kettenblattabgewandten Seite ausgehend vom Motorgehäuse verringert.

Vorzugsweise ist das Motorgehäuse bezogen auf die Rahmenmittelebene ebenfalls asymmetrisch ausgebildet. Insbesondere steht das Motorgehäuse bezogen auf die Mittelebene auf der kettenblattabgewandten Seite vor. Des Weiteren ist es bevorzugt, dass das Motorgehäuse auf derselben Seite vorsteht wie das Unterrohr. Das Motorgehäuse sowie das Unterrohr sind somit auf derselben Seite bezogen auf die Rahmenmittelebene asymmetrisch ausgestaltet.

In einer bevorzugten Weiterbildung der Erfindung weist das Unterrohr in Seitenansicht eine Höhe von weniger als 80 mm, insbesondere weniger als 75 mm und besonders bevorzugt weniger als 70 mm auf. Die Höhe des Unterrohrs ist hierbei die Außenabmessung senkrecht zur Längsrichtung des Unterrohrs.

Besonders bevorzugt ist es, dass der Fahrradrahmen in dem Unterrohr eine Batterieeinheit wie vorstehend beschrieben aufweist. Hierbei ist es besonders bevorzugt, dass die Batterieeinheit derart im Unterrohr angeordnet ist, dass das Batteriemanagementsystem auf der kettenblattabgewandten Seite angeordnet ist.

Die in bevorzugter Ausführungsform im Unterrohr des Fahrradrahmens angeordnete Batterieeinheit ist wie vorstehend beschrieben vorteilhaft weitergebildet.

Nachfolgend wird die Erfindung anhand einer bevorzugten Ausführungsform unter Bezugnahme auf die anliegenden Zeichnungen näher erläutert.

Es zeigen:
- Figur 1: eine schematische Draufsicht einer Batterieeinheit,
- Figur 2: eine schematische Schnittansicht der Batterieeinheit, wobei es sich um einen Horizontalschnitt in Längsrichtung der Batterieeinheit handelt,
- Figur 3: eine schematische Seitenansicht eines Rahmens,
- Figur 4: eine schematische Draufsicht des in Figur 3 dargestellten Fahrradrahmens und
- Figur 5: eine schematische Schnittansicht des Unterrohrs mit eingesetzter Batterieeinheit.

Die Batterieeinheit weist ein Gehäuse 10 auf. Das Gehäuse 10 weist bezogen auf eine Längsrichtung bzw. Fahrtrichtung 12 eine linke Seitenwand 14 und eine gegenüberliegende rechte Seitenwand 16 auf. Ferner weist das Batteriegehäuse eine Oberseite 18 und eine der Oberseite 18 gegenüberliegende Unterseite auf. Das im dargestellten Ausführungsbeispiel im Wesentlichen einen rechteckigen Querschnitt aufweisende Gehäuse weist ferner eine in Fahrtrichtung 12 weisende Vorderseite 20 sowie eine entgegen in Fahrtrichtung 12 weisende Rückseite 22 auf. An der Oberseite 12 ist im vorderen Bereich, der Vorderseite 20 zugewandten Bereich ein Befestigungs- bzw. Anlageelement angeordnet, das bei montierter Batterieeinheit an einer Innenseite des Unterrohrs des Fahrradrahmens anliegt. Ein weiteres Halteelement 26, das insbesondere eine sich quer zur Längsrichtung 12 erstreckende Durchgangsöffnung aufweist, ist an der Rückseite 22 angeordnet und dient zur Fixierung der Batterieeinheit im Unterrohr.

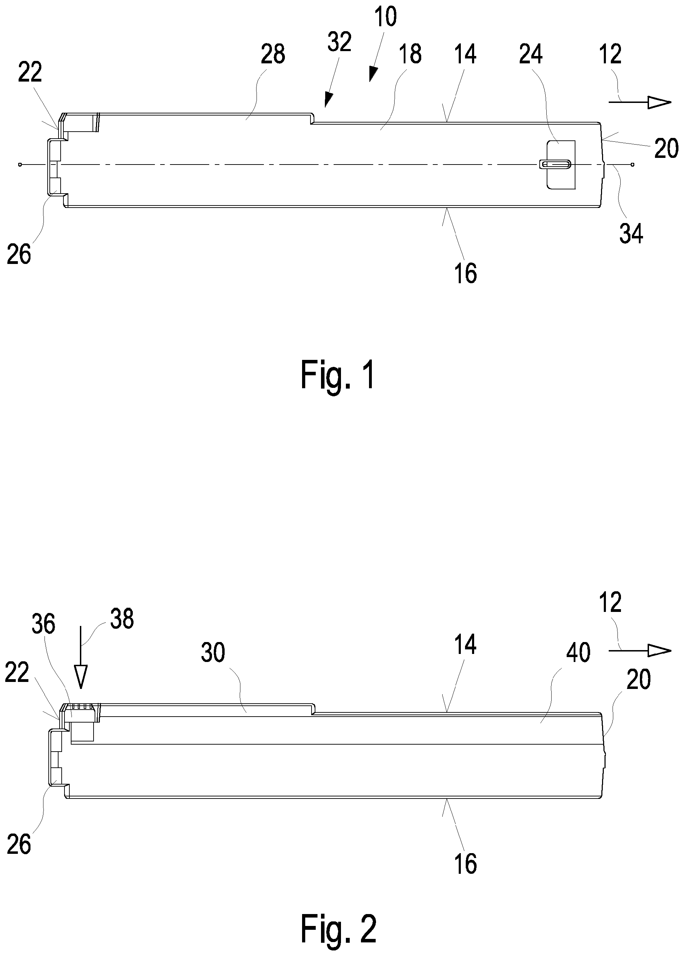

Auf der kettenblattabgewandten bzw. linken Seite 12 weist das Batteriegehäuse 10 eine im Wesentlichen quaderförmige Ausbuchtung 28 auf. Die quaderförmige Ausbuchtung 28 erstreckt sich vorzugsweise über die gesamte Höhe des Gehäuses bzw. der Seitenwand 14. In Längsrichtung 12 erstreckt sich die Ausbuchtung 28 über ca. 30-50 % der Gesamtlänge des Batteriegehäuses je nach Ausführungsform. Vorzugsweise ist in dem Ansatz 28 zumindest ein Großteil eines Batteriemanagementsystems 30 (Figur 2) angeordnet.

Die Seitenwand 14 weist in Längsrichtung 12 eine Stufe 32 auf. Im Bereich der Stufe 32 verringert sich die Breite des Batteriegehäuses 10. Somit ist ein Batteriegehäuse 10 geschaffen, das bezogen auf eine Einschubrichtung 12 in einem vorderen Bereich eine geringere Querschnittsabmessung als in einem hinteren Bereich aufweist. Bezogen auf eine senkrecht zur Zeichenebene der Figur 1 verlaufende Mittelebene 34 ist das Batteriegehäuse 10 in dem Bereich, in dem kein Ansatz 28 vorgesehen ist, symmetrisch und entsprechend in dem Bereich des Ansatzes 28 asymmetrisch.

Das Batteriemanagementsystem 30 weist einen Steckkontakt 36 auf bzw. ist mit diesem verbunden. Der Steckkontakt weist in Richtung der Seitenwand 14, so dass ein Einstecken eines Steckers in den Steckkontakt 36 üblicherweise in Richtung eines Pfeils 38, d.h. senkrecht zur Längsrichtung 12, erfolgt.

Die einzelnen Energiezellen 40, die innerhalb des Batteriegehäuses 10 angeordnet sind, sind vorzugsweise derart angeordnet, dass diese quer zur Längsrichtung 12 angeordnet sind.

Der erfindungsgemäße Fahrradrahmen weist ein Unterrohr 42 auf, das mit einem Motorgehäuse 44 verbunden ist. Hierbei ist das Unterrohr 42 derart mit dem Motorgehäuse 44 verbunden, dass ein unteres Ende des Unterrohrs 42 unterhalb des Motorgehäuses 44 angeordnet ist bzw. eine untere Einschuböffnung 46 zum Einschieben einer Batterieeinrichtung in das Unterrohr 42 zugänglich ist. Auf der gegenüberliegenden Seite ist das Unterrohr 42 mit einem Steuerrohr 48 verbunden. Ferner ist das Motorgehäuse 44 im dargestellten Ausführungsbeispiel mit einem Sattelrohr 50 verbunden. Das Sattelrohr 50 ist sodann mit einem Oberrohr 52 verbunden, das ebenfalls mit dem Steuerrohr 48 verbunden ist. Bei einer bevorzugten Ausführungsform handelt es sich um einen aus glasfaserverstärktem Material, insbesondere Karbon, hergestellten Fahrradrahmen.

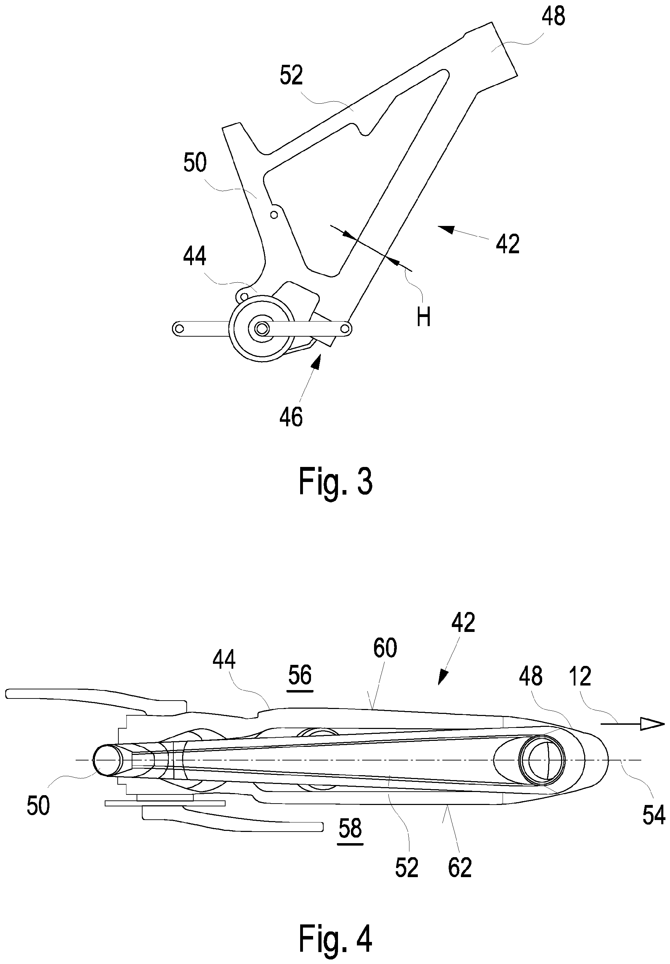

In der in Figur 3 dargestellten Seitenansicht weist das Unterrohr 42 eine verglichen mit bekannten Fahrradrahmen, in deren Unterrohr eine Batterieeinrichtung angeordnet werden kann, geringe Höhe H von insbesondere < 80 mm auf. Besonders bevorzugt ist es, dass die Höhe H < 75 mm, insbesondere < 70 mm, ist.

Das Unterrohr 42 ist bezogen auf eine Rahmenmittelebene 52 (Figur 4) asymmetrisch ausgebildet. Die Rahmenmittelebene 52 verläuft durch die Mitte des Steuerrohrs 48 sowie durch die Mitte des Sattelrohrs 50. Im dargestellten Ausführungsbeispiel ist das Oberrohr 52 ebenfalls symmetrisch zur Rahmenmittelebene 54. In Fahrtrichtung 12 nimmt der Querschnitt und die Breite des Oberrohrs 52 ausgehend vom Sattelrohr 50 in Richtung des Steuerrohrs 48 insbesondere kontinuierlich zu.

Das Motorgehäuse 44 ist zur Rahmenmittelebene ebenfalls asymmetrisch ausgebildet. Auf der in Fahrtrichtung 12 linken Seite bzw. auf der kettenblattabgewandten Seite 56 steht das Motorgehäuse 44 vor. Von einer Außenseite des Motors 44 zur Rahmenmittelebene 54 ist der Abstand somit größer als auf der Kettenblattseite 58.

Ebenso ist das Unterrohr 42 zur kettenblattabgewandten Seite 56 hin asymmetrisch, so dass auch bezogen auf das Unterrohr der Abstand zwischen einer Außenseite des Unterrohrs zur Rahmenmittelebene 54 auf der kettenblattabgewandten Seite 56 größer ist als auf der Kettenblattseite 58. Insbesondere erfolgt ein stufenloser Übergang zwischen dem Motorgehäuse 44 und dem Unterrohr 42. Die Breite des Unterrohrs in Draufsicht (Figur 4) verjüngt sich, d.h. sie nimmt ausgehend vom Motorgehäuse 44 zum Steuerrohr 48 ab. Die in Fahrtrichtung 12 linke Seite 60 des Unterrohrs 42 ist somit zur Rahmenmittelebene 54 schräg bzw. weist zu dieser einen spitzen Winkel auf.

Die gegenüberliegende rechte bzw. kettenblattseitige Seite 62 des Unterrohrs 42 ist in bevorzugter Ausführungsform parallel zur Rahmenmittelebene 54.

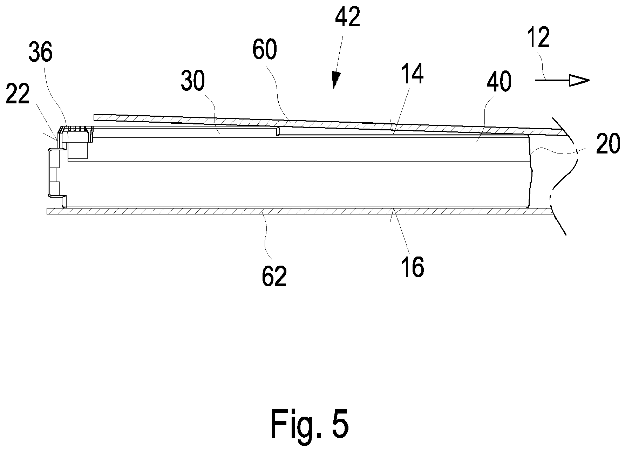

Wie insbesondere aus dem schematischen Längsschnitt des Unterrohrs 42 mit eingesetzter Batterie 40 (Fig. 5) ersichtlich ist, verjüngt sich das Unterrohr 42 in Fahrtrichtung 12. Hierbei verläuft im dargestellten Ausführungsbeispiel eine in Fahrtrichtung weisende rechte Seite 62 des Unterrohrs 42 parallel zur Fahrtrichtung 12. Die gegenüberliegende Seite 60 des Unterrohrs 42 verläuft, bezogen auf die Rahmenmittelebene 54 bzw. bezogen auf die Fahrtrichtung 12, derart, dass sie auf die gegenüberliegende Seitenwand 62 zuläuft. In Fahrtrichtung 12 verringert sich somit der Abstand zwischen den beiden Seitenwänden 60, 62 des Unterrohrs 42.

## Patentansprüche

1. Batterieeinheit für ein einen Elektromotor aufweisendes Fahrrad, mit
einem Batteriegehäuse (10) mit einer Oberseite (18), einer Unterseite und zwei Seitenwänden (14,16),
mehreren in dem Batteriegehäuse (10) angeordneten Energiezellen (40) und
einem mit den Energiezellen (40) elektrisch verbundenen Batteriemanagementsystem (30),
**dadurch gekennzeichnet, dass** das Batteriemanagementsystem (30) an einer der beiden Seiten (14,16) angeordnet ist.

2. Batterieeinheit nach Anspruch 1, **dadurch gekennzeichnet, dass** das Batteriemanagementsystem (30) im Batteriegehäuse (10) angeordnet ist.

3. Batterieeinheit nach Anspruch 1 oder 2, **dadurch gekennzeichnet, dass** das Batteriemanagementsystem (30) an der in Einschubrichtung (12) linken Seitenwand (14) angeordnet ist.

4. Batterieeinheit nach einem der Ansprüche 1-3, **dadurch gekennzeichnet, dass** sich das Batteriegehäuse (10) in Einschubrichtung (12) verjüngt, insbesondere eine Stufe (32) aufweist.

5. Batterieeinheit nach einem der Ansprüche 1-4, **dadurch gekennzeichnet, dass** das Batteriegehäuse (10) an einer Vorderseite (20) eine geringere Breite als an einer Rückseite (22) aufweist.

6. Batterieeinheit nach einem der Ansprüche 1-5, **dadurch gekennzeichnet, dass** ein Steckkontakt (36) zum elektrischen Verbinden mit dem Elektromotor seitlich insbesondere als Teil des Batteriemanagementsystems (30) angeordnet ist.

7. Batterieeinheit nach einem der Ansprüche 1-6, **dadurch gekennzeichnet, dass** die Energiezellen (40) quer zu einer Längsrichtung (12) angeordnet sind.

8. Fahrradrahmen, insbesondere Mountainbike-Rahmen oder Trekkingfahrrad-Rahmen, mit
einem Motorgehäuse (44) für einen Elektromotor,
einem mit dem Motorgehäuse (44) verbundenen Unterrohr (42),
einer im Unterrohr (42) im Bereich des Motorgehäuses (44) vorgesehenen Einschuböffnung (46) zum Einschieben einer Batterieeinheit in das Unterrohr (42),
**dadurch gekennzeichnet, dass**
das Unterrohr (42) bezogen auf eine Rahmenmittelebene (54) asymmetrisch ist.

9. Fahrradrahmen nach Anspruch 8, **dadurch gekennzeichnet, dass** das Unterrohr (42) ausgehend vom Motorgehäuse (44) sich verjüngt.

10. Fahrradrahmen nach Anspruch 9, **dadurch gekennzeichnet, dass** das Unterrohr (42) kettenblattseitig (58), bezogen auf die Rahmenmittelebene (54), sich weniger verjüngt als auf der kettenblattabgewandten Seite (56).

11. Fahrradrahmen nach einem der Ansprüche 8-10, **dadurch gekennzeichnet, dass** das Unterrohr (42) kettenblattseitig (58) parallel zur Rahmenmittelebene (54) verläuft.

12. Fahrradrahmen nach einem der Ansprüche 8-11, **dadurch gekennzeichnet, dass** die kettenblattabgewandte Seite (56) des Unterrohrs (42) zur Rahmenmittelebene (54), ausgehend vom Motorgehäuse (44), einen sich verringernden Abstand aufweist.

13. Fahrradrahmen nach einem der Ansprüche 8-12, **dadurch gekennzeichnet, dass** das Motorgehäuse (44) bezogen auf die Rahmenmittelebene (54) asymmetrisch ist.

14. Fahrradrahmen nach Anspruch 13, **dadurch gekennzeichnet, dass** das Motorgehäuse (44) zur selben Seite wie das Unterrohr (42) asymmetrisch ist.

15. Batterieeinheit bzw. Fahrradrahmen nach einem der Ansprüche 1-14, **dadurch gekennzeichnet, dass** das Unterrohr (42) in Seitenansicht eine Höhe von weniger als 80 mm, insbesondere weniger als 75 mm und besonders bevorzugt weniger als 70 mm aufweist.

16. Batterieeinheit nach einem der Ansprüche 1-15 mit einer Batterieeinheit nach einem der Ansprüche 1-7.

17. Batterieeinheit nach Anspruch 16, **dadurch gekennzeichnet, dass** das Batteriemanagementsystem (30) auf der kettenblattabgewandten Seite (56) angeordnet ist.
